# FASCICULE DE BREVET EUROPEEN

(11) **EP 2 148 803 B1**
(45) Date de publication et mention de la délivrance du brevet: **16.02.2011**
(21) Numéro de dépôt: 08788156.1
(22) Date de dépôt: 10.04.2008
(51) Int. Cl.: B62D 21/15, B62D 25/04, B60R 16/02, B60R 21/00, B60R 21/213

(54) **ELEMENT DE FIXATION ET STRUCTURE DE PIED MILIEU POUR VEHICULE AUTOMOBILE**
MONTAGEELEMENT UND MITTELSÄULENSTRUKTUR FÜR EIN MOTORFAHRZEUG
MOUNTING ELEMENT AND CENTRE-PILLAR STRUCTURE FOR MOTOR VEHICLE

(30) Priorité: 29.05.2007 FR 0755308
(43) Date de publication de la demande: 03.02.2010
(73) Titulaire: Renault S.A.S., 92100 Boulogne-Billancourt (FR)
(72) Inventeur: POLY, PASCAL, F-78180 Montigny Le Bretonneux (FR); JANOT, JULIEN, F-27500 Corneville Sur Risle (FR)
(86) Numéro de dépôt international: PCT/FR2008/050634
(87) Numéro de publication internationale: WO 2008/148958

(56) Documents cités:
- EP-A- 1 234 750
- DE-A1-102005 017 981

## Description

La présente invention concerne un élément de fixation apte à être fixé dans un pied milieu de véhicule automobile.

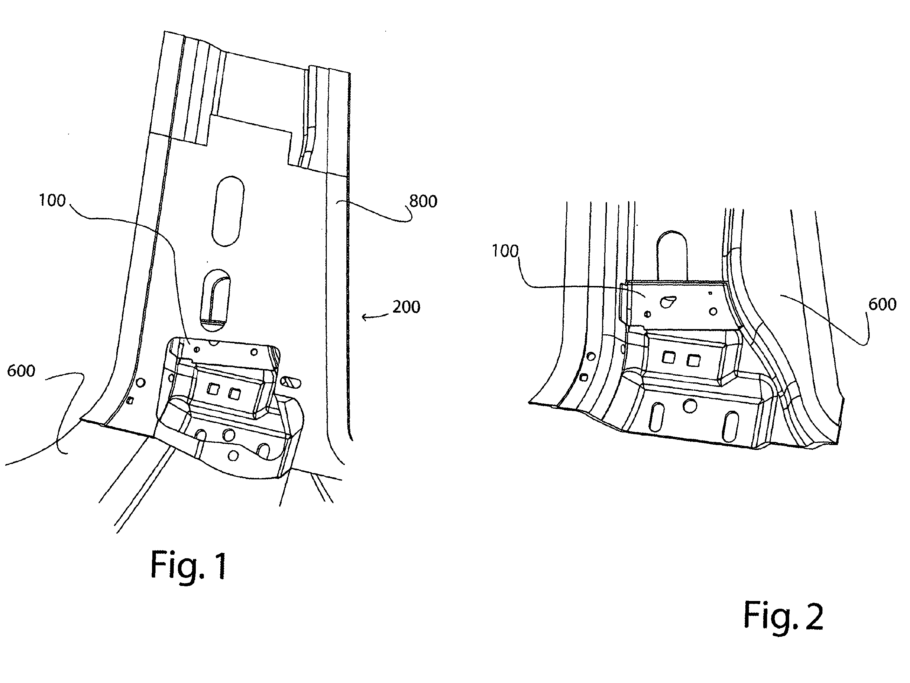

De façon classique, un pied milieu 200 est composé d'élément structurels tels qu'un premier élément de structure et un élément de renfort associé 600, auxquels est ajouté un élément de doublure 800, qui vient fenner la structure en U de l'élément de renfort 600, vers l'intérieur du véhicule. Tel que représenté sur les figures 1 et 2, un élément de fixation 100 d'un moyen de déclenchement d'airbag est disposé dans l'élément de renfort 600, et est recouvert par l'élément de doublure 800, qui intègre différentes fonctions de retenue et d'accrochage.

Certains véhicules voient leur pied milieu réduit en largeur pour optimiser l'accessibilité aux places avant et arrière. Dans ce contexte, l'élément de doublure de pied milieu qui est traditionnellement disposé sur le pied milieu vers l'intérieur du véhicule est faiblement dimensionné et les fonctions de clipage de cablage ou de retenue de garniture sont difficiles à mettre en place.

Un des objectifs de l'invention est de proposer un élément de fixation et une structure de pied milieu associé qui permettent de prendre en charge l'ensemble des fonctions de fixation de la zone, avec un rapport de masse avantageux par rapport à l'état de la technique.

En outre, en réponse à des objectifs que l'on retrouve invariablement chez les différents constructeurs automobiles, la présente invention se veut également peu coûteuse et peu encombrante.

Pour répondre à ces objectifs, l'invention propose un élément de fixation tel que décrit précédemment, caractérisé en ce qu'il est formé d'une plaque sensiblement plane, munie sensiblement en son centre d'un ajour apte à permettre la fixation d'un moyen de déclenchement d'airbag, prolongée perpendiculairement sur l'un de ses bords par une patte de fixation munie d'un trou, et prolongée sur un autre de ses bords par une patte de retenue qui s'étend sensiblement parallèlement à la plaque à une altitude différente.

En outre, l'ajour peut présenter une forme de boutonnière.

L'invention protège également une structure de pied milieu de pied milieu de véhicule automobile, du type comportant un premier élément de structure et un élément de renfort associé, caractérisé en ce qu'un élément de fixation tel qu'évoqué ci-dessus est fixé sur l'élément de renfort.

Selon différentes caractéristiques de la présente invention :
- un élément de renfort présente une forme sensiblement en U, la plaque de l'élément de fixation étant fixé sur la base du U formant l'élément de renfort, de sorte qu'un jeu est disposé entre l'élément de renfort et la partie de la plaque portant l'ajour.
- une patte de retenue de l'élément de fixation est disposée en regard d'une feuillure de l'élément de renfort, de sorte qu'un deuxième jeu est aménagé entre l'élément de renfort et la patte de retenue pour permettre la retenue d'un élément d'habillage.
- un élément de doublure positionné sur l'élément de renfort, l'extrémité inférieure de l'élément de doublure étant située à une hauteur supérieure à celle ou s'étend l'élément de fixation.

L'invention concerne enfin un véhicule automobile, dans lequel au moins une structure de pied milieu tel qu'évoquée ci dessus est disposée sur l'un des côtés du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une structure de pied milieu et d'un élément de fixation selon l'état de la technique, avec notamment une doublure de pied milieu inférieur ;
- la figure 2 est une représentation de la figure 1, la doublure de pied milieu inférieur étant transparente ;
- la figure 3 est une représentation schématique d'une structure de pied milieu et d'un élément de fixation selon l'invention ;
- la figure 4 est une vue d'ensemble du pied milieu de la figure 3 dans un côté de caisse de véhicule.

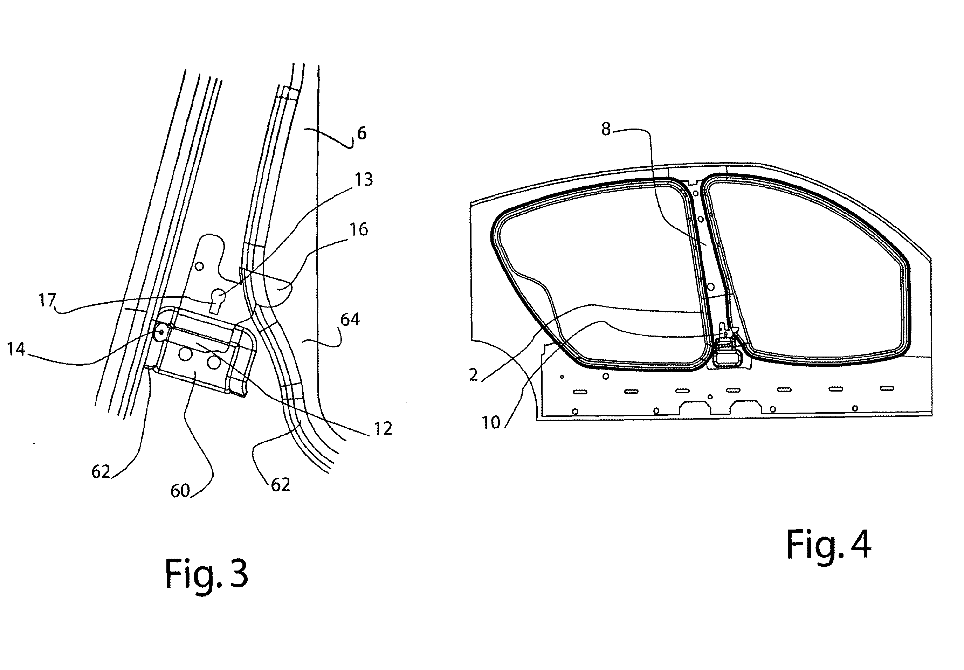

Tel que représenté sur les figures 3 et 4, un élément de fixation 10 selon l'invention est apte à être fixé dans un pied milieu 2 de véhicule automobile.

Cet élément de fixation 10 est formé principalement d'une plaque 12, d'une patte de fixation 14 et d'une patte de retenue 16, permettant en une pièce unique la prise en compte de trois fonctions d'accrochage.

Une plaque 12 sensiblement plane est ainsi munie sensiblement en son centre d'un ajour 13 apte à permettre la fixation d'un moyen de déclenchement d'airbag non représenté. Cette plaque 12 est prolongée perpendiculairement sur l'un de ses bords par une patte de fixation 14, et prolongée sur un autre de ses bords par un montant perpendiculaire 17 qui porte à son extrémité opposé une patte de retenue 16, cette patte de retenue 16 s'étendant sensiblement parallèlement à la plaque 12, à une altitude différente.

La première fonction de fixation réalisée par l'élément de fixation 10 est la fixation d'un moyen de déclenchement d'airbag. Un tel moyen doit être disposé latéralement au véhicule, et avantageusement dans le pied milieu, pour déterminer de la nécessité de déclenchement des airbags lors d'un choc latéral. Un ajour 13 est ainsi réalisé dans la plaque 12 de l'élément de fixation 10 pour qu'une agrafe solidaire du moyen de déclenchement puisse coopérer avec cet ajour 13.

Tel que représenté sur la figure 3, et selon un exemple de réalisation, l'ajour 13 peut prendre la forme d'une boutonnière dans laquelle l'agrafe solidaire du moyen de déclenchement vient coulisser et se mettre en position bloquée. Afin de rendre possible le mouvement de l'agrafe dans la boutonnière, un jeu doit être prévu entre la plaque 12 de l'élément de fixation 10 et la base 60 de l'élément de renfort 6 du pied milieu 2, sur lequel va être fixé l'élément de fixation 10.

La deuxième fonction de fixation réalisée par l'élément de fixation 10 est la fixation de câbles. De nombreux câbles électriques s'étendent désormais sur toute la longueur du véhicule pour véhiculer des informations représentatives aussi bien du pilotage de la voiture que du confort des passagers. Il est nécessaire d'assurer en plusieurs points des agrafages des câbles pour que le positionnement de ceux-ci soit contrôlé par les constructeurs. Ainsi, une patte de fixation 14 prolonge perpendiculairement la plaque 12 de l'élément de fixation 10 sur l'un de ses bords, cette patte de fixation 14 étant munie d'un trou 15 apte à recevoir une agrafe non représentée et associée à un câble ou un faisceau de câbles.

Enfin, une troisième fonction de retenue réalisée par l'élément de fixation 10 est la retenue d'un élément d'habillage. A cet effet, la patte de retenue 16 est amenée à être disposée contre une feuillure 64 d'un élément structurel du pied milieu 2, un deuxième jeu étant disposé entre cette feuillure 64 et la patte de retenue 16, de sorte que l'élément d'habillage peut être glissé entre la patte de retenue 16 et le pied milieu 2, puis être maintenu par la pression de la patte de retenue 16.

Une structure de pied milieu 2, de façon classique, comporte un premier élément de structure 4 et un élément de renfort 6 associé. Cet ensemble structurel a pour objet de rigidifier le côté de caisse du véhicule. Tel que représenté notamment à la figure 4, un élément de fixation 10 selon l'invention est fixé sur l'élément de renfort 6, et orienté vers l'intérieur du véhicule.

L'élément de renfort 6 présente une forme sensiblement en forme de U, de sorte que cet élément de renfort 6 est formé d'une base 60, prolongé verticalement par deux montants intermédiaire 62 qui portent à leur extrémité libre une feuillure 64 s'étendant sensiblement parallèlement à la base 60 et vers l'extérieur de l'élément de renfort 6. L'orientation de l'élément de renfort 6 est telle que le U présente son ouverture vers l'intérieur du véhicule. La coopération de l'élément de fixation 10 et de l'élément de renfort 6 est selon l'invention assurée par la plaque 12 sensiblement plane de l'élément de fixation 10 qui vient se fixer sur la base 60 du U de l'élément de renfort 6. L'élément de fixation 10 est positionné dans le fond de l'élément de renfort 6 de sorte que la patte de retenue 16 de l'élément de fixation 10 s'étend en regard d'une feuillure 64 de l'élément de renfort 6 en U. Selon l'invention, un deuxième jeu est disposé entre la patte de retenue 16 et la feuillure 64 de l'élément de renfort 6, de sorte que ce jeu permet le pincement et la retenue d'un élément de garniture du véhicule. Il sera compris que la patte de retenue 16 peut être réorientée suivant les orientations de la garniture.

Selon l'invention, aucun élément de doublure ne recouvre l'élément de fixation 10. Tel que représenté à la figure 4, un élément de doublure 8 est dispose dans la partie supérieure du pied milieu 2, en regard de la partie supérieure de l'élément de renfort 6, et l'extrémité inférieure de cet élément de doublure 8 est située à une hauteur supérieure à celle ou s'étend l'élément de fixation 10. Cet élément de doublure 8 sert à accrocher le rail de renvoi de ceinture. Il pourrait toutefois être envisagé, selon un second mode de réalisation, qu'aucun élément de doublure ne soit prévu en complément de la structure évoquée du pied milieu 2 avec le premier élément de structure 4 et l'élément de renfort 6 associé.

## Revendications

1. Elément de fixation (10) apte à être fixé dans un pied milieu (2) de véhicule automobile, **caractérisé en ce qu'**il est formé d'une plaque (12) sensiblement plane, munie sensiblement en son centre d'un ajour (13) apte à permettre la fixation d'un moyen de déclenchement d'airbag, prolongée perpendiculairement sur l'un de ses bords par une patte de fixation (14), et prolongée sur un autre de ses bords par une patte de retenue (16) qui s'étend sensiblement parallèlement à la plaque (12) à une altitude différente.

2. Elément de fixation (10) selon la revendication 1, **caractérisé en ce que** l'ajour (13) présente une forme de boutonnière.

3. Structure de pied milieu (2) de véhicule automobile, du type comportant un premier élément de structure (4) et un élément de renfort (6) associé, **caractérisé en ce qu'**un élément de fixation (10) selon l'une des revendications précédentes est fixé sur l'élément de renfort (6).

4. Structure selon la revendication précédente, **caractérisée en ce que** l'élément de renfort (6) présente une forme sensiblement en U, la plaque (12) de l'élément de fixation (10) étant fixé sur la base (60) du U formant l'élément de renfort (6), de sorte qu'un jeu est disposé entre l'élément de renfort (6) et la partie de la plaque (12) portant l'ajour (13).

5. Structure selon l'une des revendications 3 ou 4, **caractérisée en ce que** la patte de retenue (16) de l'élément de fixation (10) est disposé en regard d'une feuillure (64) de l'élément de renfort (6), de sorte qu'un deuxième jeu est aménagé entre l'élément de renfort (6) et la patte de retenue (16) pour permettre la retenue d'un élément d'habillage.

6. Structure selon l'une des revendications 3 à 5, et dans lequel un élément de doublure (8) est positionné sur l'élément de renfort (6), **caractérisée en ce que** l'extrémité inférieure de l'élément de doublure (8) est située à une hauteur supérieure à celle ou s'étend l'élément de fixation (10).

7. Véhicule automobile, **caractérisé en ce qu'**au moins une structure de pied milieu (2) selon l'une des revendications 3 à 6 est disposée sur l'un des côtés du véhicule.

## Claims

1. Mounting element (10) able to be mounted in a motor vehicle centre pillar (2), **characterized in that** it is formed form an approximately flat plate (12) which is provided approximately in its centre with a hole (13) for mounting an airbag triggering means, is extended perpendicularly on one of its rims by a mounting lug (14) and is extended on another of its rims by a retaining lug (16) that extends approximately parallel to the plate (12) at a different height.

2. Mounting element (10) according to Claim 1, **characterized in that** the hole (13) is in the form of a buttonhole.

3. Motor vehicle centre-pillar structure (2), of the type having a first structural element (4) and an associated reinforcing element (6), **characterized in that** a mounting element (10) according to one of the preceding claims is mounted on the reinforcing element (6).

4. Structure according to the preceding claim, **characterized in that** the reinforcing element (6) is approximately U-shaped, the plate (12) of the mounting element (10) being mounted on the base (60) of the U forming the reinforcing element (6) such that there is a clearance between the reinforcing element (6) and the part of the plate (12) bearing the hole (13).

5. Structure according to either of Claims 3 and 4, **characterized in that** the retaining lug (16) of the mounting element (10) is located opposite a rebate (64) of the reinforcing element (6) such that a second clearance is formed between the reinforcing element (6) and the retaining lug (16) in order to retain a trim element.

6. Structure according to one of Claims 3 to 5, and in which a lining element (8) is positioned on the reinforcing element (6), **characterized in that** the lower end of the lining element (8) is located at a height greater than that at which the mounting element (10) extends.

7. Motor vehicle, **characterized in that** at least one centre-pillar structure (2) according to one of Claims 3 to 6 is located on one of the sides of the vehicle.

## Patentansprüche

1. Befestigungselement (10), das in einer B-Säule (2) eines Kraftfahrzeugs befestigt werden kann, **dadurch gekennzeichnet, dass** es von einer im Wesentlichen flachen Platte (12) geformt wird, die im Wesentlichen in ihrer Mitte mit einem Durchbruch (13) versehen ist, der geeignet ist, um die Befestigung einer Airbag-Auslöseeinrichtung zu ermöglichen, die lotrecht an einem ihrer Ränder durch eine Befestigungsklaue (14) verlängert wird und an einem anderen ihrer Ränder durch eine Haltelasche (16) verlängert wird, die sich parallel zur Platte (12) in einer anderen Höhe erstreckt.

2. Befestigungselement (10) nach Anspruch 1, **dadurch gekennzeichnet, dass** der Durchbruch (13) die Form eines Langlochs aufweist.

3. B-Säulen-Struktur (21 eines Kraftfahrzeugs von der Art, die ein erstes Strukturelement (4) und ein zugeordnetes Verstärkungselement (6) aufweist, **dadurch gekennzeichnet, dass** ein Befestigungselement (10) nach einem der vorhergehenden Ansprüche am Verstärkungselement (6) befestigt ist.

4. Struktur nach dem vorhergehenden Anspruch, **dadurch gekennzeichnet, dass** das Verstärkungselement (6) im Wesentlichen die Form eines U aufweist, wobei die Platte (12) des Befestigungselements (10) so an der Basis (60) des das Verstärkungselement (6) bildenden U befestigt ist, dass ein Spiel zwischen dem Verstärkungselement (6) und dem den Durchbruch (13) tragenden Teil der Platte (12) angeordnet ist.

5. Struktur nach einem der Ansprüche 3 oder 4, **dadurch gekennzeichnet, dass** die Haltelasche (16) des Befestigungselements (10) vor einem Falz (64) des Verstärkungselements (6) angeordnet ist, so dass ein zweites Spiel zwischen dem Verstärkungselement (6) und der Haltelasche (16) eingerichtet ist, um den Rückhalt eines Verkleidungselements zu erlauben.

6. Struktur nach einem der Ansprüche 3 bis 5 und in dem ein Innenblechelement (8) auf dem Verstärkungselement (6) positioniert ist, **dadurch gekennzeichnet, dass** das untere Ende des Innenblechelements (8) sich auf einer größeren Höhe als diejenige befindet, in der sich das Befestigungselement (10) erstreckt.

7. Kraftfahrzeug, **dadurch gekennzeichnet, dass** mindestens eine B-Säulen-Struktur (2) nach einem der Ansprüche 3 bis 6 auf einer der Seiten des Fahrzeugs angeordnet ist.
